# EUROPEAN PATENT SPECIFICATION

(11) **EP 2 611 309 B1**
(45) Date of publication and mention of the grant of the patent: **02.08.2017**
(21) Application number: 11821306.5
(22) Date of filing: 30.08.2011
(51) Int. Cl.: A23K 10/00, A23K 10/20, A23K 10/30, A23K 20/111, A23K 20/158, A23K 20/174, A23K 20/20, A23K 40/10, A23K 50/42

(54) **PET FOOD**
HAUSTIERFUTTER
ALIMENT POUR ANIMAUX DE COMPAGNIE

(30) Priority: 10.03.2011 JP 2011052442; 31.08.2010 JP 2010194981
(43) Date of publication of application: 10.07.2013
(73) Proprietor: Unicharm Corporation, Ehime 799-0111 (JP)
(72) Inventor: NAKASE, Koichi, Kanonji-shi Kagawa 769-1602 (JP); SAKAJI, Kimihiko, Kanonji-shi Kagawa 769-1602 (JP); UCHII, Sayaka, Kanonji-shi Kagawa 769-1602 (JP)
(74) Representative: Peter, Julian
(86) International application number: PCT/JP2011/004814
(87) International publication number: WO 2012/029285

(56) References cited:
- EP-A1- 1 514 479
- WO-A1-95/25438
- WO-A1-2008/049437
- WO-A2-01/11988
- WO-A2-01/50881
- JP-A- 5 000 052
- JP-A- 11 075 710
- JP-A- 2000 247 900
- JP-A- 2004 321 165
- JP-A- 2004 323 500
- US-A1- 2007 202 211
- Janette Gelroth ET AL: "Food uses of fiber" In: "Handbook of Dietary Fiber", 1 January 2001 (2001-01-01), CRC Press, New York, XP055093284, ISBN: 978-0-82-478960-2 page 445, * page 445, paragraph 1 *
- FAO/ WHO: 'JOINT FAO/WHO FOOD STANDARDS PROGRAMME CODEX ALIMENTARIUS COMMISSION Thirty second Session REPORT OF THE 30 th SESSION OF THE CODEX COMMITTEE ON NUTRITION AND FOODS FOR SPECIAL DIETARY USES Cape Town, South Africa 3 -7 November 2008' INTERNET ARTICLE, [Online] 01 November 2008, ROME, ITALY, pages 1 - 83, XP055157767 Retrieved from the Internet: <URL:http://www.codexalimentarius.org/input /download/report/710/al32_26e.pdf> [retrieved on 2014-12-10]
- CAROLINE M. PRESTON ET AL: "What's in a nutshell: an investigation of structure by carbon-13 cross-polarization magic-angle spinning nuclear magnetic resonance spectroscopy", JOURNAL OF AGRICULTURAL AND FOOD CHEMISTRY, vol. 40, no. 2, 1 February 1992 (1992-02-01), pages 206-210, XP055157755, ISSN: 0021-8561, DOI: 10.1021/jf00014a008

## Description

### Technical Field

The present disclosure relates to a pet food which is a cat food.

### Background Art

Some pet animals, such as cats and rabbits have the habit of grooming themselves and ingesting a large amount of their own hair through the mouth. The hair is known to accumulate in the pet's body as a hairball and cause disorders in elimination and the like.

In order to solve such disorders, for example, it is known that adding separate dietary fiber, which is a fiber source material, to a pet food for promoting elimination of hair with excrement and reduced hairball formation.

Further prior art disclosing food for pets or human beings using dietary fibers is published e.g. under US 2007/202211 A1, WO01/50881 A2, JP 2004 323500 A and EP 1 514 479 A1.

### Summary of Invention

According to an aspect of the present invention, the cat food comprises dietary fibre including lignin, wherein the cat food contains said lignin in an amount of no less than 0.5% by mass and no greater than 2.2% by mass with respect to the amount of the cat food, wherein the cat food contains the dietary fibre in an amount of no less than10% by mass and no greater than 20% by mass with respect to the amount of cat food, wherein the dietary fibre comprises a fibre source material for cat food including lignin in an amount of no less than 5% by mass and no greater than 25% by mass with respect to the amount of the fibre source material and wherein the cat food promotes the elimination of a hairball.

### Brief description of drawings

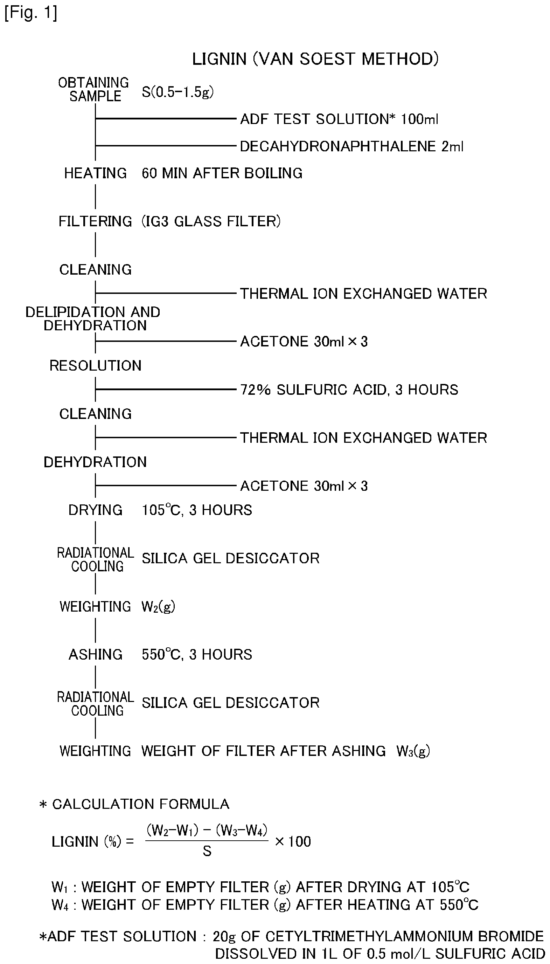

FIG. 1 is a flow diagram of the Van Soest method for measuring lignin.

### Description of Embodiments

One or more embodiment of the present invention will be described in detail hereinafter; however, it should be noted that other embodiments of the present invention are not limited to the specifically disclosed details.

The inventors have conducted extensive research and found that preference of a pet for the food can be improved by adding lignin, which is naturally included in vegetable fiber, such as unrefined pulp, to the pet food. Thus, a pet food with superior preference qualities for a pet is provided without reducing the pet's food consumption even with the addition of a fiber source material.

### Basic Formulation of Pet Food

As used herein, a pet food means a feed provided to a pet animal. Pet animals include animals kept by and living with humans and there is no particular limitation thereto. In the present invention, cat food is exemplified as the pet food. The pet food is a feed containing desired nutrient components for various ages and constitutions of cats.

The pet food according to the present embodiment is a dry granular solid with no greater than 10% of moisture, and is a so-called dry type food.

First, materials used for the pet food and compositions thereof are described. As the materials, materials except for the fiber source material can be used with no particular limitation. One example is as follows: 30 to 50% by mass of grain; 20 to 40% by mass of meat and seafood; 5 to 10% by mass of the fiber source material; 1 to 15% by mass of animal oil and fat; 1 to 10% by mass of beans and vegetables; 0.1 to 1% by mass of minerals and vitamins; 0.01 to 4% by mass of coloring agent and amino acids; and an appropriate amount of moisture of no greater than 10% by mass, based on the total amount of the pet food.

As used herein, dietary fiber is a combination of all dietary fibers, such as pectin, lignin, cellulose and the like, contained in the pet food, and includes dietary fibers derived from both the fiber source material and other materials of the pet food such as grain, beans, vegetables and the like. For example, the amount of dietary fiber derived from the other materials of the pet food (i.e., not from the fiber source material) is no less than 5% by mass and no greater than 10% by mass of pet food, and is mainly derived from grains, such as corn and wheat, and beans, and the like. By adding a fiber source material, such as pulp, in an amount within the range no less than 5% by mass and no greater than 10% by mass of pet food, the total amount of dietary fiber in the pet food is made to be no less than 10% by mass and no greater than 20% by mass. The total amount of dietary fiber in the pet food can be measured by the enzymatic-gravimetric method (modified Prosky method).

The pet food containing the dietary fiber of the abovementioned composition stimulates a hairball, which is formed of hair swallowed by a cat, to move in the digestive tract and promotes elimination of the hairball. An amount of dietary fiber less than 10% by mass may not provide a sufficient elimination promotion effect. An amount more than 20% by mass may not improve the elimination promotion effect as desired, despite the increased amount of dietary fiber, while lowering the relative proportion of other materials, which are nutrition sources.

### Fiber Source Material

As used herein, the fiber source material means fiber that is a material for pet food, containing no less than 90% by mass and no greater than 92 % by mass of insoluble dietary fiber.

The fiber source material in particular contains lignin in an amount of no less than 5% by mass and no greater than 25% by mass, and preferably in an amount of no less than 10% and no greater than 25% by mass, and more preferably in an amount of no less than 10% by mass and no greater than 18% by mass. Refined fiber source materials known to the inventors to have been used in pet food generally contain lignin only in an amount of less than approximately 5% by mass. As a result, such fiber source materials are inferior in improving the animal's preference for the food.

On the other hand, the pet food of the present embodiment uses the fiber source material containing lignin in an amount of no less than 5% by mass and no greater than 25% by mass. The elimination promotion effect is thus further promoted and pet's preference for the pet food is improved by increasing the amount of lignin in the fiber source material to an appropriate amount. If the amount of lignin is less than 5% by mass in the fiber source material, an effect of improving preference for the pet food by a cat might not be realized. An amount greater than 25% by mass may not provide desirable improvements in the elimination promotion effect or in an effect of improving pet's preference for the pet food despite the increased amount of lignin. As a measuring method for lignin content, the Southgate method disclosed in J. Sci. Food Agric., 20, 331 (1969) and Taihi Tou Yukibutsu Bunseki Hou (Method for Analysis of Organic Matter Such as Compost) II-3-(8) is used, in addition to the Van Soest method, which is disclosed in Proc. Nutr. Soc., 32, 123 (1973), shown in the flow diagram in FIG. 1. The above documents are incorporated by reference herein in their entirety.

The fiber source material can be obtained by adjusting a degree of removal of lignin during a refining step in a manufacturing process of so-called pulp from wood fiber as a raw material. For example, the degree of lignin removal is adjusted by mitigating extraction of lignin by acid or base when removing lignin, or by mitigating the degree of lignin degradation, or by adjusting the surface area of wood before treatment Wood used as a raw material for pulp is mainly composed of cellulose, hemicellulose and lignin, and contains fatty acids, resin acids, and a variety of inorganic matter. In a case of using such wood fiber as dietary fiber, chemical and physical refinement for removing lignin and the like generally takes place for obtaining dietary fiber mainly composed of cellulose and hemicellulose. However, in manufacture of the fiber source material of the present embodiment, pulp is obtained from peeled wood that is optionally made into chips, by a known mechanical, semi-chemical, or chemical processing method, without a lignin removal process. Alternatively, a lignin removal process but with an adjustment in the degree of lignin removal, is used. The pulp can be eventually pulverized and powderized.

In the present invention the amount of the fiber source material is adjusted so that the amount of lignin with respect to a total amount of the pet food is no less than 0.5% by mass and no greater than 2.2% by mass. More specifically, by making the amount of the fiber source material 5 to 10% by mass with respect to the total amount of the pet food, the amount of lignin can be made to be no less than 0.5% by mass and no greater than 2.2% by mass with respect to the total amount of the pet food. If the amount of lignin with respect to the total amount of the pet food is within the above-mentioned range, preference for the pet food by a cat is sufficiently improved. An amount of lignin less than 0.5% by mass with respect to the total amount of the pet food may not provide a sufficient effect of improving preference for the pet food by a cat and therefore undesireble, too. An amount greater than 2.2% by mass with respect to the total amount of the pet food may not provide sufficient improvements in pet's preference for the pet food, and therefore undesireble, too. Although a reason for the improvement in pet's preference for the pet food has not been scientifically determined, the cause is believed by the inventor(s) to be due to an ac-ridness masking effect and a flavor enhancing effect provided by lignin.

In another embodiment, the amount of lignin with respect to the total amount of the pet food may be no less than 1% by mass and no greater than 2.2% by mass. In other words, in addition to or in lieu of using the abovementioned fiber source material, adding lignin separately as a preference enhancing agent or a preference improving agent is clearly within the scope of the present invention.

### Pet Food

The pet food of the abovementioned formulation is manufactured by a known method. For example, the abovementioned materials with the exception of animal oil and fat are mixed by a stirrer, and then a mixture of the materials is extruded under heat and pressure, cut, and formed into pellets by an extruder (a pressure extrusion granulator). The pellets thus formed are dried by a dryer. The pellets thus dried are cooled down and then coated with the animal oil and fat by spraying or applying onto surfaces thereof. The amount of sprayed or applied oil and fat, for example, beef tallow, chicken fat and the like, is in a range of 1 to 15% by mass with respect to the total amount of the pet food.

Shape and size of the pet food pellets are not particularly limited; however, a pellet of approximately 0.1 to 0.4 g is preferable, as an example.

A dry food has been described as one embodiment of the pet food of the present invention; however, a wet food containing more moisture than the abovementioned embodiment is also within the scope of the present invention as long as the dietary fiber and lignin are included in the abovementioned amounts.

In addition, the fiber source material contained in the pet food of the present embodiment can be used in a weight management food required to be low in calories, or in other calorie controlled foods, thereby improving pet's preference for such foods. Such pet foods are also within the scope of the present invention.

### EXAMPLES

The present embodiment is described in further detail hereinafter with reference to Examples; however, the present invention is not limited thereto.

### Example 1

A pet food of a formulation as in Table 1 was manufactured in pellets of approximately 0.1 to 0.4 g each, by mixing, heating/pressurizing, forming, drying, cooling and coating, according to the above-described method. Here, a fiber source material containing 12.5% by mass of lignin was used as the fiber source material (measured according to the Van Soest method as shown in Fig. 1).

**[Table 1]**

| MATERIALS | COMPOSITIONS (% BY MASS) |
|---|---|
| GRAIN | 46.0 |
| MEAT AND SEAFOOD | 32.0 |
| FIBER SOURCE | 7.5 |
| ANIMAL OIL AND FAT | 6.0 |
| BEANS AND VEGETABLES | 6.0 |
| MINERALS AND VITAMINS | 0.5 |
| COLORING AGENT AND AMINO ACIDS, MOISTURE | 2.0 |

The pet food of the Example 1 was analyzed by the Van Soest method for lignin content, which was 1.6% by mass.

The pet food of the Example 1 was analyzed by the enzymatic-gravimetric method (modified Prosky method) for dietary fiber content, which was 13.2% by mass.

In the modified Prosky method, samples were treated with enzyme so as to reduce the molecular weight of starch and protein. Thereafter, the samples having thus reduced molecular weight were each divided into a residue and a filtrate by filtering, and high-molecular weight components were insolubilized by adding 4 parts ethanol to the filtrate. Furthermore, the residue of each sample was sequentially cleansed with ethanol and acetone, and dried, thereby obtaining weights of insoluble dietary fiber and water soluble dietary fiber.

### Example 2

A pet food was manufactured with the same materials and compositions, and by the same manufacturing method as Example 1, with the exception that the amount of fiber source material was adjusted such that the amount of lignin with respect to the total amount of the pet food measured according to the Van Soest Method was 0.5 by mass.

### Comparative Example 1

A pet food of a formulation as in Example 1, with the exception of using a fiber source material containing less than 0.2% by mass of lignin, which is a quantitative limit of the Van Soest Method, was manufactured according to the above-described method.

The pet food of the Comparative Example 1 was analyzed by the Van Soest method for lignin content, which was 0.3% by mass. It is noted that the amount of lignin in the pet food may include an amount of lignin derived from materials other than the fiber source material.

The pet food of the Comparative Example 1 was analyzed by the enzymatic-gravimetric method (modified Prosky method) for dietary fiber content, which was 13.4% by mass.

### Comparative Example 2

A pet food was manufactured with the same materials and compositions, and by the same manufacturing method as Example 1, with the exception that the amount of fiber source material was adjusted such that the amount of lignin with respect to the total amount of the pet food measured according to the Van Soest Method was 3.0 by mass.

### Hairball Elimination Effect Evaluation Test

A hairball elimination effect evaluation test was conducted for Example 1 and Comparative Example 1 under the following conditions. The test was carried out for 4 weeks, targeted at 40 cats for Example 1 and 41 cats for Comparative Example 1, which had a tendency to vomit hairballs, selected from common adult cats kept as pets, of no younger than 1 year old. During the 4 weeks of testing, special consideration was given not to give food other than test food (Example 1 or Comparative Example 1) and water, and the test food was given in an appropriate amount to each of the cats, adjusted by their owners. A hairball elimination effect was evaluated after 2 weeks, 3 weeks, and 4 weeks. It should be noted that, since the test subjects (cats) for the Example and the Comparative Example were not the same, the test foods did not affect each other.

Results are shown in Table 2. As shown in Table 2, the Example 1 containing the fiber source material of the present embodiment, which is richer in lignin, showed superior results compared to the Comparative Example 1 containing the fiber source material less than 0.2% by mass of lignin, which is a quantitative limit of the Van Soest Method.

**[Table 2]**

| EXAMPLE | | | |
|---|---|---|---|
| EVALUATION | AFTER 2 WEEKS | AFTER 3 WEEKS | AFTER 4 WEEKS |
| EFFECTIVE | 26.80 | 34.20 | 51.20 |
| SOMEWHAT EFFECTIVE | 29.3% | 34.1% | 17.1% |
| NEITHER EFFECTIVE NOR INEFFECTIVE | 41.5% | 31.7% | 31.7% |
| SOMEWHAT INEFFECTIVE | 2.4% | 0.0% | 0.0% |
| INEFFECTIVE | 0.0% | 0.0% | 0.0% |

| COMPARATIVE EXAMPLE | | | |
|---|---|---|---|
| EVALUATION | AFTER 2 WEEKS | AFTER 3 WEEKS | AFTER 4 WEEKS |
| EFFECTIVE | 22.5% | 30.0% | 35.0% |
| SOMEWHAT EFFECTIVE | 32.5% | 45.0% | 42.5% |
| NEITHER EFFECTIVE NOR INEFFECTIVE | 40.0% | 17.5% | 17.5% |
| SOMEWHAT INEFFECTIVE | 5.0% | 7.5% | 5.0% |
| INEFFECTIVE | 0.0% | 0.0% | 0.0% |

### Preference Evaluation Test 1

A preference evaluation test was conducted for the Example 1 and Comparative Example 1 under the following conditions. The test was targeted at 51 cats of no younger than 1 year old. The pet food of one of the Example 1 and the Comparative Example 1 was given to them for the first 5 days and the pet food of the other of the Comparative Example 1 and the Example 1 was given to them for the next 5 days, while observing their appetite for these foods. After 10 days, results of observation were compared and appetite (preference) was evaluated in 5 levels (the Comparative Example 1 is greatly superior, the Comparative Example 1 is superior, no difference observed, the Example 1 is superior, and the Example 1 is greatly superior). In order to avoid bias in evaluation between the first 5 days and the latter 5 days, about half (26) of the targeted cats were fed with the Example 1 in the first half of the test and with the Comparative Example 1 in the latter half. The test food was given in an appropriate amount to each of the cats, adjusted by their owners. Final scores of pet's preference for the food were obtained for each food by dividing the sum of (greatly superior) + (superior) + (no change was observed / 2) with the number of test subjects (51).

### Preference Evaluation Test

A preference evaluation test was conducted for the Example 2, Comparative Example 1, and Comparative Example 2, under following conditions. The test was performed with 20 healthy cats between 2 to 14 years old. 70 g of each of pet food of Example 2 and Comparative Example 1 was simultaneously given to each cat. 70 g of each pet food of Example 2 and Comparative Example 1 put in a pet food container separately was simultaneously given to each cat. Consumption of each pet food was compared according to the two-point discrimination method. The test was conducted once a day for two days. Positions of pet food containers were swapped from the first day to the second day. Based on a result of observation for two days, relative preference of the pet food of Example 2 to that of comparative Example 1 was evaluated in score by equation in Preference Evaluation test 1. In addition, preference for the pet food of Comparative Example 2 was also evaluated in score accodring to the same method.

Results of Preference Evaluation Tests 1 and 2 are shown in Table 3. Examples 1 and 2 showed significant improvement in preference compared to Comparative Example 1 using the fiber source material of which lignin content is less than 0.2 by mass, which is the quantitative limit of the van Soest Method. On the other hand, the pet food of Comparative Example 2 did not show improvement in preference.

**[Table 3]**

| | Comparative Example 1 | Example 1 | Example 2 | Comparative Example 2 |
|---|---|---|---|---|
| Lignin Content | Not Detectable | 1.6% | 0.5% | 3.0% |
| Score of Preference to Comparative Example 1 | - | 61 | 55 | 35 |

## Claims

1. A pet food, comprising dietary fiber including lignin,
wherein the pet food contains said lignin in an amount of no less than 0.5% by mass and no greater than 2.2% by mass with respect to the amount of the pet food,
wherein the pet food contains the dietary fiber in an amount of no less than 10% by mass and no greater than 20% by mass with respect to the amount of the pet food,
wherein the dietary fiber comprises a fiber source material for pet food including lignin in an amount of no less than 5% by mass and no greater than 25% by mass with respect to the amount of the fiber source material,
wherein the pet food is a cat food, and
wherein the pet food promotes elimination of a hairball.

2. The pet food according to claim 1,
wherein the lignin is contained in an amount of no less than 10% by mass and no greater than 18% by mass with respect to the amount of the fiber source material.

3. The pet food according to claim 1 or 2, wherein the pet food contains said fiber source material in an amount of no less than 5% by mass and no greater than 10% by mass with respect to the amount of the pet food.

4. The pet food according to claims 1 to 3, wherein said fiber source material contains no less than 90% by mass and no greater than 92 % by mass of insoluble dietary fiber with respect to the amount of the fiber source material.

5. The pet food according to any one of claims 1 to 4, further comprising one or more of:
grain,
meat,
seafood,
fiber source material,
animal oil,
animal fat,
beans,
vegetables,
minerals,
vitamins, coloring agent, and
amino acids.

6. A method of manufacturing a pet food according to any one of claims 1 to 5, wherein the fiber source material for pet food is used in an amount of no less than 5% by mass and no greater than 10% by mass.

7. The method according to claim 6, further comprising:
preparing the fiber source material from wood fiber, without a process of removing lignin from the wood fiber.

8. The method according to any one of claims 6 to 7, further comprising using, in addition to the fiber source material, other materials selected from the group consisting of:
grain,
meat,
seafood,
animal oil,
animal fat,
beans,
vegetables,
minerals,
vitamins,
coloring agent, and
amino acids.

## Patentansprüche

1. Haustierfutter umfassend Ballaststoffe einschließlich Lignin,
wobei das Haustierfutter das Lignin in einer Menge von nicht weniger als 0,5 Massenprozent und nicht mehr als 2,2 Massenprozent in Bezug auf die Menge des Haustierfutters enthält,
wobei das Haustierfutter die Ballaststoffe in einer Menge von nicht weniger als 10 Massenprozent und nicht mehr als 20 Massenprozent in Bezug auf die Menge des Haustierfutters enthält,
wobei die Ballaststoffe ein Faserquellenmaterial für Haustierfutter einschließlich Lignin in einer Menge von nicht weniger als 5 Massenprozent und nicht mehr als 25 Massenprozent in Bezug auf die Menge des Faserquellmaterials umfassen,
wobei das Haustierfutter ein Katzenfutter ist und
wobei das Haustierfutter die Eliminierung eines Haarballs fördert.

2. Haustierfutter nach Anspruch 1,
wobei das Lignin in einer Menge von nicht weniger als 10 Massenprozent und nicht mehr als 18 Masen-% in Bezug auf die Menge des Faserquellenmaterials enthalten ist.

3. Haustierfutter nach Anspruch 1 oder 2, wobei das Haustierfutter das Faserquellenmaterial in einer Menge von nicht weniger als 5 Massenprozent und nicht mehr als 10 Massenprozent in Bezug auf die Menge des Haustierfutters enthält.

4. Haustierfutter nach Ansprüchen 1 bis 3, wobei das Faserquellenmaterial nicht weniger als 90 Massenprozent und nicht mehr als 92 Massenprozent unlöslicher Ballaststoffe in Bezug auf die Menge des Faserquellenmaterials enthält

5. Haustierfutter nach einem der Ansprüchen 1 bis 4, ferner umfassend eines oder mehrerer von:
Getreide,
Fleisch,
Meeresfrüchte,
Faserquellenmaterial,
tierisches Öl,
tierisches Fett,
Bohnen,
Gemüse,
Mineralien,
Vitamine, Färbemittel und
Aminosäuren.

6. Verfahren zur Herstellung eines Haustierfutters nach einem der Ansprüche 1 bis 5, wobei das Faserquellenmaterial für Haustierfutter in einer Menge von nicht weniger als 5 Massenprozent und nicht mehr als 10 Massenprozent verwendet wird.

7. Verfahren nach Anspruch 6 ferner umfassend:
Herstellen des Faserquellenmaterials aus Holzfaser ohne ein Verfahren zur Entfernung von Lignin aus der Holzfaser.

8. Verfahren nach einem der Ansprüche 6 bis 7 ferner umfassend die Verwendung anderer Materialien, zusätzlich zu dem Faserquellenmaterial, ausgewählt aus der Gruppe bestehend aus:
Getreide,
Fleisch,
Meeresfrüchte,
tierisches Öl,
tierisches Fett,
Bohnen,
Gemüse,
Mineralien,
Vitamine,
Färbemittel und
Aminosäuren.

## Revendications

1. Aliment pour animaux de compagnie, comprenant des fibres alimentaires comprenant la lignine,
dans lequel l'aliment pour animaux de compagnie contient ladite lignine en une quantité supérieure ou égale à 0,5 % en poids et inférieure ou égale à 2,2 % en poids par rapport à la quantité d'aliment pour animaux de compagnie,
dans lequel l'aliment pour animaux de compagnie contient la fibre alimentaire en une quantité supérieure ou égale à 10 % en poids et inférieure ou égale à 20 % en poids par rapport à la quantité d'aliment pour animaux de compagnie,
dans lequel la fibre alimentaire comprend un matériau de source de fibre pour un aliment pour animaux de compagnie comprenant la lignine en une quantité supérieure ou égale à 5 % en poids et inférieure ou égale à 25 % en poids par rapport à la quantité de matériau de source de fibre,
dans lequel l'aliment pour animaux de compagnie est un aliment pour chat, et
dans lequel l'aliment pour animaux de compagnie favorise l'élimination d'une boule de poils.

2. Aliment pour animaux de compagnie selon la revendication 1,
dans lequel la lignine est contenue en une quantité supérieure ou égale à 10 % en poids et inférieure ou égale à 18 % en poids par rapport à la quantité de matériau de source de fibre.

3. Aliment pour animaux de compagnie selon la revendication 1 ou 2, dans lequel l'aliment pour animaux de compagnie contient ledit matériau de source de fibre en une quantité supérieure ou égale à 5 % en poids et inférieure ou égale à 10 % en poids par rapport à la quantité d'aliment pour animaux de compagnie.

4. Aliment pour animaux de compagnie selon les revendications 1 à 3, dans lequel ledit matériau de source de fibre contient pas moins de 90 % en poids et pas plus de 92 % en poids de fibre alimentaire insoluble par rapport à la quantité de matériau de source de fibre.

5. Aliment pour animaux de compagnie selon les revendications 1 à 4, comprenant également un ou plusieurs de :
grain,
viande,
fruits de mer,
matériau de source de fibre,
huile animale,
graisse animale,
haricots,
légumes,
minéraux,
vitamines, agent de coloration, et
acides aminés.

6. Procédé de fabrication d'un aliment pour animaux de compagnie selon l'une quelconque des revendications 1 à 5, dans lequel le matériau de source de fibre pour l'aliment pour animaux de compagnie est utilisé en une quantité supérieure ou égale à 5 % en poids et inférieure ou égale à 10 % en poids.

7. Procédé de la revendication 6, comprenant également :
la préparation du matériau de source de fibre à partir de fibre de bois, en l'absence d'un procédé d'élimination de la lignine de la fibre de bois.

8. Procédé selon l'une quelconque des revendications 6 à 7, comprenant également l'utilisation, en sus du matériau de source de fibre, d'autres matériaux choisis dans le groupe constitué de :
grain,
viande,
fruits de mer,
huile animale,
graisse animale,
haricots,
légumes,
minéraux,
vitamines,
agent de coloration, et
acides aminés.
